# EUROPEAN PATENT SPECIFICATION

(11) **EP 1 037 754 B1**
(45) Date of publication and mention of the grant of the patent: **14.08.2002**
(21) Application number: 97951607.7
(22) Date of filing: 09.12.1997
(51) Int. Cl.: B60C 23/04

(54) **PRESSURE SENSOR FOR A TIRE AND METHOD THEREFOR**
REIFENDRUCKSENSOR UND VERFAHREN DAZU
CAPTEUR DE PRESSION POUR PNEUMATIQUE ET PROCEDE ASSOCIE

(43) Date of publication of application: 27.09.2000
(73) Proprietor: THE GOODYEAR TIRE & RUBBER COMPANY, Akron, Ohio 44316-0001 (US)
(72) Inventor: PARRISH, Gary, Charles, Canal Fulton, OH 44614 (US); BEAUVAIS, Melissa, Marie, Akron, OH 44313 (US); DUNN, William, Frank, Stow, OH 44224 (US); BELSKI, Gary, Thomas, Massillon, OH 44646 (US)
(74) Representative: Leitz, Paul
(86) International application number: US9722570
(87) International publication number: WO9929524

(56) References cited:
- US-A- 4 067 235
- US-A- 4 350 854
- US-A- 5 119 066

## Description

### Technical Field

This invention relates to a pneumatic tire comprising a pressure sensor and to a method of attaching a pressure sensor to an inflation chamber of a pneumatic tire.

As illustrated by the references described below, it is known in the art to transmit, at radio frequencies, data from a transponder contained within the structure of a tire or tire and wheel assembly.

In the prior art, most of the difficulties encountered in incorporating sensors into a tire are caused by the stresses encountered in the tire building process and the sometimes rigorous conditions to which a tire is subjected. Sensors and transponder systems can be destroyed by heat and pressure in the tire building process, and can be destroyed by rough use, shock or grime when in use in a tire.

Accordingly, a sensor which is to be embedded in a tire to record and transmit tire data must be robust enough to survive tire stresses, light enough so as not to affect the balance of the tire, and sized or placed so as not to interfere with the integrity of the tire. Also, the cost of the apparatus should not be more than a small percentage of the total cost of the tire.

Some prior art pressure sensors that may be used in a tire are exposed directly to the inflation chamber of the tire. Dirt and debris from the tire may contaminate the device and affect the accuracy of the reading or make it non-functional. Also, when a sensor is embedded in a tire construction in the tire building process and it stops functioning, it usually cannot be replaced in the cured tire without destroying the integrity of the tire.

In an effort to attach a pressure sensor in a tire in a way that it would be protected, the inventors herein secured a pressure sensor inside a rubber patch or pouch in the inflation chamber of a tire. Although the pressure sensor was protected and gave some accurate readings, the response time was very slow, and when pressure in a tire was changed to test accuracy of the pressure sensor, the time necessary for the pressure sensor to reach equilibrium with the pressure in the inflation chamber of the tire was sometimes many days.

### Background Art

Tire safety indicator means have been provided in the prior art to indicate when the tread of a tire is worn to the point where the tread or the tire must be replaced. See for example De Cicco in U.S. Patent 3,770,040.

As the art has advanced, systems for monitoring vehicle tire pressure and the like have been proposed wherein a transmitter and a receiver are mounted on a vehicle body, and magnetically coupled inductor and enhancer circuits are carried on the vehicle wheel to provide monitoring of vehicle tire pressure, as described by Allen in U.S. Patent 4,588,978. Other devices to monitor tire pressure have been proposed by Galasko et al., in U.S. Patent 4,578,992, who teach a coil mounted in a tire which forms, with a capacitor, a passive oscillatory circuit. The circuit is energized by pulses supplied via a coil positioned outside the tire and secured to the vehicle, and the frequency in the passive oscillatory circuit is varied with tire pressure due to changes caused to the capacitance value of the capacitor. The frequency in the circuit is sensed by a coil positioned outside the tire and secured to the vehicle.

Milheiser, in U.S. Patent 4,730,188, teaches the use of a passive integrated transponder which is attached to or imbedded in an item to be identified, and is excited by an inductive coupling from an interrogator.

Fiorletta, in U.S. Patent 5,289,160, teaches a wireless tire pressure monitoring system which warns a driver of low pressure in one or more tires. Fiorletta teaches that a pressure transducer, transmitter and antenna are integrally housed and mounted to the tire stem of a tire. When the pressure transducer senses a tire pressure below a pre-selected pressure, the transmitter broadcasts a radio frequency signal that, upon detection by a receiver mounted on the vehicle, warns the driver. In a preferred embodiment, the transmitter is a device that is periodically interrogated by an RF signal from a transmitter on the vehicle.

In PCT Applications WO90/12474 and 90/01754, it is taught that electronic transponders can be embedded within or on vehicle tires with wire loop antennas and electromagnetically actuated by signals from an interrogator coil. The application indicates that the transponder responds to actuation by producing a shifted frequency modulated with synchronization pulses and identifying digital information, and can also be used to include information on the condition and environment of the tire.

Hettich et al., in U.S. Patent 5,140,851, teach a circuit arrangement for monitoring air volume in vehicle tires which provides correction for the temperature of the tire. The patent states that the temperature and pressure measurement value of the tire is measured by a rotating sensor on the wheel, which is monitored, and the data fed to a correction circuit which also receives a plurality of correction parameters. A corrected value for the temperature or for the air pressure in the tire is transmitted at output of the correction circuit as a function of the correction parameters.

PCT Application WO92/20539 provides an abnormal tire condition warning system which comprises a housing, a band for mounting the housing on the tire rim, a sensor for monitoring the condition within the tire, circuitry operatively connected to the sensor for generating radio signals indicative of the tire condition, a power supply operatively connected to the circuitry, a centrifugal switch and a receiver for receiving the radio signals.

Dunn et al., in U.S. Patent 4,911,217 describes a radio-frequency tire identification system having an integrated circuit chip transponder.

Pollack et al., in U.S. Patent 5,181,975, teach a tire having an integrated circuit transponder which comprises a coil antenna of small enclosed area, as compared to the area enclosed by the bead of the tire, which acts as a primary winding of a transformer. The coil is planar in shape, and when positioned between the inner liner and the carcass ply of the tire, may include a pressure sensor.

Brown et al., in U.S. Patent 5,218,861, teach a pneumatic tire having an integrated circuit transponder which has an antenna which is coupled by electric or magnetic fields to the bead of the tire.

Koch et al., in U. S. Patent 5,500,065 teaches locating a monitoring device radially inward of the inner liner in a pneumatic tire, somewhere in the crown portion of the tire.

U.S. Patent 4,067,235, corresponding to the feature of the preambles of claims 1 and 7, discloses a remote tire pressure sensor encapsulated by a suitable elastomeric compound which is bonded to a radially inner surface of the tire.

It is an object of the invention to provide a pressure sensor which can be built into a tire, or can be attached to a completed tire in a manner that protects the sensor from debris in the tire yet gives quick and accurate readings, and is small enough that it does not have a noticeable affect on the operation of the tire.

Another object of the present invention is the provision of a method for attaching a pressure sensor to the inflation chamber of a pneumatic tire. Other objects of the invention will be apparent from the following description and claims.

### Definitions

The following definitions are provided to facilitate the reading of the specification and the understanding of the invention.
"Transmitter" refers to a radio frequency emitter.
"Receiver" refers to a radio frequency receptor.
"Interrogator" refers to a transmitter-receiver decoder combination.
"Transponder" refers to a receiver of RF energy capable of transmitting coded information to an interrogator (scanner).
"Equatorial plane (EP)" refers to the plane intersected at the tire centerline.
"Radially" refers to a radius line from a tire axis to a tire circumference, and lines parallel thereto.

### Summary of the invention

According to the present invention a pneumatic tire comprises an outer surface including a ground contacting surface and an inner inflation chamber, and a pressure sensor encapsulated by encapsulating means associated with a radially inner surface of the inflation chamber, and a wicking means associated with the pressure sensor whereby the wicking means provides a path for pressure equilibrium between the pressure sensor and the inflation chamber.

Preferably, the wicking means is selected from the group consisting of gas absorbing textile cords, hollow filaments, and woven textile cords or filaments.

Preferably, the encapsulating means comprises a patch of rubber surrounding the pressure sensor, the patch of rubber being attached to a radially inward surface of the inflation chamber.

More specifically, the pneumatic tire comprises at least two parallel annular beads, at least one carcass ply wrapped around the beads, tread disposed over the at least one carcass ply in a crown area of the tire, sidewalk disposed between the tread and the beads, and an inflation chamber radially inward of the tread and axially between the sidewalls, and an encapsulated sensing system associated with the inflation chamber.

The sensing system comprises an apparatus for transmitting tire pressure data comprising a transponder, with a chip having capacity at least sufficient to handle pressure sensor data, for responding to predetermined signals which trigger a responsive signal for transmitting pressure data from the tire, and a pressure sensor associated with the transponder, an encapsulating means for encapsulating the pressure sensor, and a wicking means for providing pressure equilibrium between the encapsulated pressure sensor and the inflation chamber.

In an illustrated embodiment, the pneumatic tire has an inner liner which is disposed radially inward of the carcass ply and the pressure sensor is next to the inner liner and the encapsulating means is attached to the inner liner. In the illustrated embodiment the pressure sensor is further coated or surrounded by insulating rubber.

The wicking means may be selected from the group consisting of gas absorbing textile cords, hollow filaments, and woven textile cords or filaments.

Also provided is a method of attaching a pressure sensor to an inflation chamber of a pneumatic tire comprising the steps of, (a) placing a pressure sensor in a tire construction in a low flexing, substantially flat location corresponding to a surface of an inflation chamber in a tire,
(b) placing a wicking means over the pressure sensor, (c) attaching a rubber patch material to the surface of an inflation chamber over the pressure sensor and the wicking means wherein the wicking means has at least one end outside the dimensions of the rubber patch.

In an illustrated embodiment, the method further comprises the steps of (a) building the tire with an inner liner comprising a radially inward surface of the inflation chamber, (b) placing the pressure sensor next to the inner liner, (c) placing the wicking means over the pressure sensor, and (d) adhesively attaching a rubber patch to the inner liner covering the pressure sensor and partially covering the wicking means.

As is the case with similar prior art devices, the transponder is designed to receive a signal from a transmitting device for electronically activating the electronic circuit of the chip and for transmitting data from the electronic circuit to a receiving device.

### Brief Description of Drawings

Fig. 1 illustrates a cross section of a RMT (radial medium truck) tire having the apparatus of the invention embedded in the crown of the tire.
Fig. 2 illustrates an enlarged view of a portion of the tire of Fig. 1
Fig. 3 illustrates an apparatus of the invention in a tire as viewed radially outward from the rim.

### Description of the Invention

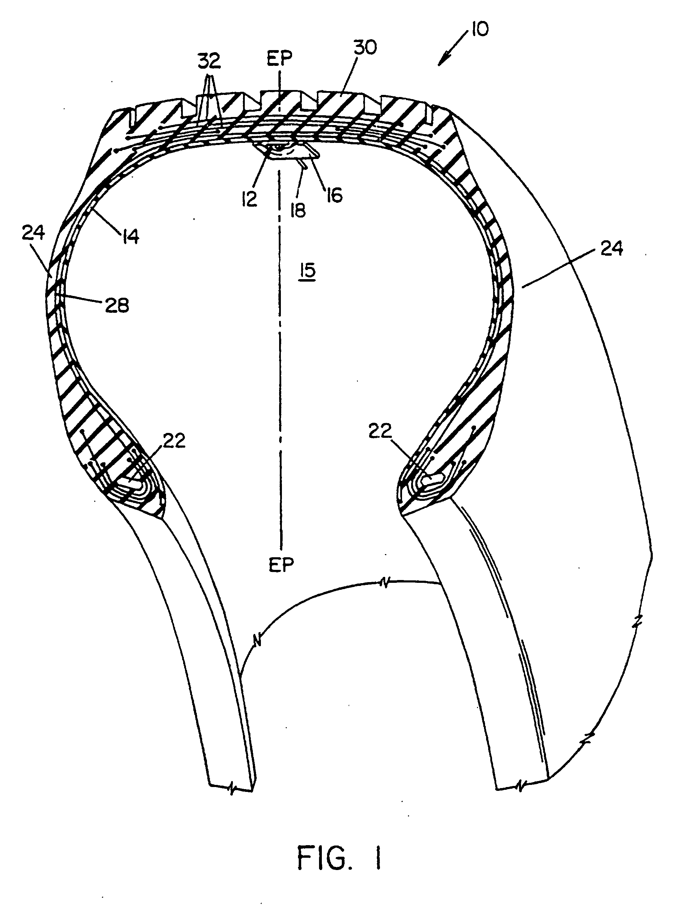

With reference now to Fig. 1, a tire 10 is illustrated which incorporates apparatus 12, which can be used to provide tire data such as the inflation pressure within the tire. As is conventional in the art, the tire is made using at least one pair of annular beads 22 over which is wrapped at least one carcass ply 28. Belts 32 are disposed over carcass ply 28 in a crown area of the tire, and tread 30 is disposed over belts 32. Sidewalls 24 are disposed between tread 30 and beads 22. In the illustrated embodiment, the tire also has an inner liner 14 which is disposed radially below carcass ply 28. Inflation chamber 15 contains the fluids used to inflate the tire when the tire is mounted on a rim.

The tire illustrated is an RMT (radial medium truck) tire, but those skilled in the art will recognize that the invention may have utility in passenger tires, or any tire for which data on the pressure within the tire is needed.

A tire, depending on the kind, may have up to 4 pairs of beads, up to 12 carcass plies, and up to 12 belts.

Apparatus 12 is a transponder with a chip 12a having at least capacity to collect and transmit pressure data, and a pressure sensor 12b associated with said transponder.

Apparatus 12 is located in the tire in a position where flexing is minimal and where a substantially flat surface can be used to assure attachment of the apparatus to the inflation chamber 15. The lower sidewall near the bead and the center of the crown area of the tire are examples of possible locations for attachment of apparatus 12 to the tire 10.

In the illustrated embodiment, apparatus 12 is disposed under the center of the tread, i.e. at the equatorial plane (EP) of the tire, and radially below carcass ply 28 and inner liner 14. Apparatus 12 comprises one or more integrated circuit chips 12a, an antenna 12c and any ancillary components needed for making pressure data on the tire readable.

The transponder component of the apparatus 12 is similar to those illustrated in US-A- 5,181,975, US-A- 5,218,861, and WO99/29523, WO99/29522 and WO99/29525, which may be used to monitor tire pressure, all assigned to The Goodyear Tire and Rubber Company. The pressure sensor component used in the illustrated embodiment is a Case Western Reserve University device described in US-A- 5,528,452.

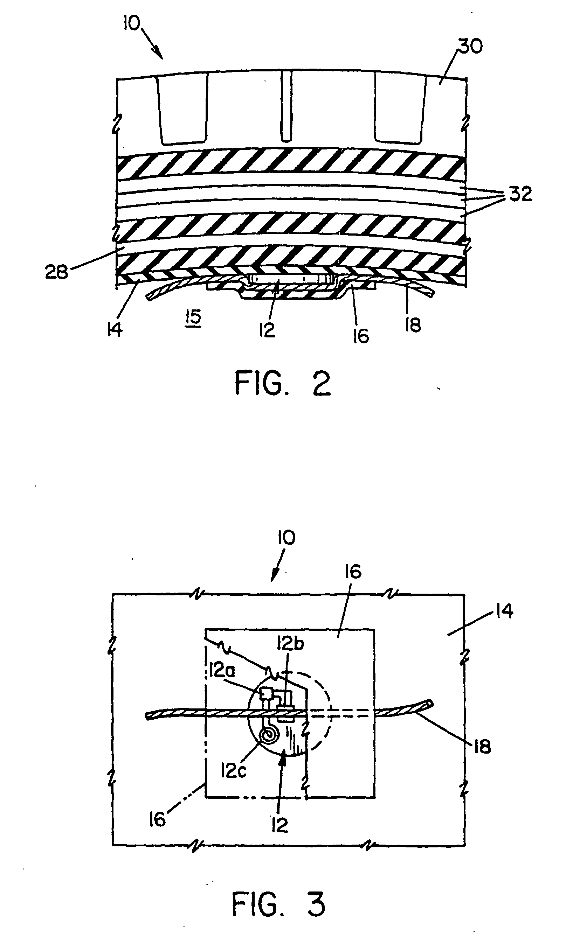

With reference now to Figs. 1, 2 and 3, in the illustrated embodiment the apparatus 12 may stand alone in the tire 10 to provide pressure data only. Those skilled in the art will recognize that the pressure sensor used in the invention can be used with other sensing devices and may be associated with annular antennae to provide a 360° read around the tire as illustrated in the prior art discussed above and more specifically in WO99/29522.

When apparatus 12 is incorporated into a tire, it is placed on the surface of inflation chamber 15, said surface being inner liner 14, if the tire contains an inner liner, or the radially inner surface of carcass ply 28, if no inner liner is used, with or without an adhesive. In the illustrated embodiment, apparatus 12 is surrounded by insulating rubber (not shown) to protect the electronics therein from stray electrical charges and from potentials applied by test equipment used to inspect the casings in retread operations. Insulating rubbers disclosed in the Goodyear application referred to above are suitable for this purpose.

Rubber patch 16 is the primary means by which apparatus 12 is held in place.

Because it is preferred that apparatus 12 be isolated from inflation chamber 15, so that dirt and foreign matter do not foul the pressure sensor, all of the surface area of patch 16 which can be placed in contact with the surface of the inflation chamber 15 is securely attached thereto, i.e. it is preferred that apparatus 12 be completely encased in rubber patch 16. The attachment of patch 16 to inflation chamber 15 can be made adhesively and/or by vulcanization when the tire is being built, or may be incorporated into a completed tire adhesively, for example when a tire is being submitted for retreading.

Patch 16 is an elastomeric material, preferably natural rubber. In the illustrated embodiment, apparatus 12 is not attached to or vulcanized into the tire, but is held in place by the surrounding relationship of patch 16.

To reduce the response time of apparatus 12, and provide quick equilibrium between the pressure sensor and inflation chamber 15, a path means 18 is provided between the pressure sensor and inflation chamber 15 which permits gas molecules to migrate to and from the pressure sensor and inflation chamber 15. Although technically, path means 18 may be provided as a pin hole in elastomeric patch 16, in reality, a pin hole has a tendency to be plugged by adhesives, the flow of rubber during vulcanization, and grime, and some means must be provided to assure that the path remains open. Accordingly, in the illustrated embodiment, path means 18 is provided as string or cord, preferably in the form of a bleeder cord, a strip of fabric woven with bleeder cords, or a hollow filament. Such bleeder cords are described by Pepe et al in U.S. Patent 4,363,346, and by Sid-Ahmed in U.S. Patent 5,221,382 and references cited therein.

Path means 18 may be longer than patch 16, or may be placed so that one end thereof extends beyond an edge of patch 16 or is exposed above the surface of patch 16.

Path means 18 is placed over apparatus 12, and patch 16 is then placed over path means 18, taking care that at least one end of path means 18 remains outside the dimensions or the surface of patch 16. In the illustrated embodiment, both ends of path means 18 extend outside the dimensions of patch 16.

In tire tests, it has been shown that path means 18, when bleeder cords or filaments are used, provides a path that makes the pressure sensor quickly responsive to pressure changes in the tire. Since bleeder cords permit flow of simple molecules, but prevent the flow of macro molecules such as grime, adhesive, and rubber, the pressure sensor is kept free of debris and grime.

When inner liner 14 is used in a tire, apparatus 12 is placed next to inner liner 14, path means 18 is placed over apparatus 12, and patch 16 is placed over path means 18 and apparatus 12 and is attached to inner liner 14.

## Claims

1. A pneumatic tire (10) comprising an outer surface including a ground contacting surface (30) and an inner inflation chamber (15), and a pressure sensor (12b) encapsulated by encapsulating means (16) associated with a radially inner surface of said inflation chamber, **characterized by** a wicking means (18) associated with said pressure sensor whereby said wicking means provides a path for pressure equilibrium between said pressure sensor (12b) and said inflation chamber (15).

2. The pneumatic tire of claim 1 wherein said wicking means (18) is selected from the group consisting of gas absorbing textile cords, hollow filaments, and woven textile cords or filaments.

3. The pneumatic tire of claim 1 wherein said encapsulating means comprises a patch of rubber (16) surrounding said pressure sensor, said patch of rubber being attached to a radially inward surface of said inflation chamber (15).

4. The pneumatic tire (10) of claim 1 further comprising at least two parallel annular beads (22), carcass plies (28) wrapped around said beads, tread (30) disposed over said carcass plies in a crown area of said tire, sidewalls (24) disposed between said tread and said beads, and the inflation chamber (15) radially inward of said tread and axially between said sidewalls, and an encapsulated sensing system associated with said inflation chamber, said sensing system comprising an apparatus for transmitting tire pressure data comprising
a transponder (12) for responding to predetermined signals which trigger a responsive signal for transmitting pressure data,
said pressure sensor (12b),
a chip (12a) associated with said transponder (12) having capacity at least sufficient to handle input from said pressure sensor (12b) and to transmit pressure data from said tire (10).

5. The pneumatic tire of claim 4 wherein an inner liner (14) is disposed radially inward of said carcass ply (28) and said pressure sensor (12b) is proximal to said inner liner and said encapsulating means is attached to said inner liner.

6. The pneumatic tire of claim 4 wherein said wicking means (18) is selected from the group consisting of gas absorbing textile cords, hollow filaments, and woven textile cords or filaments.

7. A method of attaching a pressure sensor (12b) to an inflation chamber (15) of a pneumatic tire (10) comprising
(a) placing a pressure sensor (12b) in a tire construction in a low flexing, substantially flat location corresponding to a surface of an inflation chamber (15) in a tire,
**characterized by** the further steps of
(b) placing a wicking means (18) over said pressure sensor,
(c) attaching a rubber patch (16) of rubber material to said surface of an inflation chamber (15) over said pressure sensor (12b) and said wicking means (18) wherein said wicking means has at least one end outside the dimensions of said rubber patch.

8. The method of claim 7 further comprising the steps of
(a) building said tire with an inner liner (14) comprising a radially inward surface of said inflation chamber,
(b) placing said pressure sensor (12b) on said inner liner,
(c) placing said wicking means (18) over said pressure sensor, and
(d) adhesively attaching a rubber patch to said inner liner covering said pressure sensor and partially covering said wicking means.

9. The method of claim 7 comprising the further step of selecting said wicking means (18) from the group consisting of cotton bleeder cords, polyester bleeder cords, hollow filaments, and mixtures thereof.

## Patentansprüche

1. Luftreifen (10) mit einer Außenfläche, die eine Bodenaufstandsfläche (30) enthält, mit einer inneren Aufpump-Kammer (15) und mit einem Druckfühler (12b), der durch ein einer radial inneren Fläche der Aufpump-Kammer zugeordnetes Verkapselungsmittel (16) verkapselt ist, **gekennzeichnet durch** ein dem Druckfühler zugeordnetes Dochtmittel (18), welches Dochtmittel einen Druckausgleich-Pfad zwischen dem Druckfühler (12b) und der Aufpump-Kammer (15) ergibt.

2. Luftreifen nach Anspruch 1, bei dem das Dochtmittel (18) aus der aus gasabsorbierenden Textilkorden, Hohlfäden und gewebten Textilkorden oder Fäden bestehenden Gruppe ausgewählt ist.

3. Luftreifen nach Anspruch 1, bei dem das Verkapselungsmittel ein den Druckfühler umgebendes Kautschukkissen (16) umfasst, welches Kautschukkissen an einer radial inneren Fläche der Aufpump-Kammer (15) angebracht ist.

4. Luftreifen (10) nach Anspruch 1, der weiter mindestens zwei parallele kreisförige Wülste (22), um die Wülste umgeschlagene Karkasslagen (28), eineN über den Karkasslagen in einem Kronenbereich des Reifens angeordneten Laufstreifen (30), zwischen dem Laufstreifen und den Wülsten angeordnete Seitenwände (24) und die Aufpump-Kammer (15) radial innerhalb des Laufstreifens und axial zwischen den Seitenwänden umfasst sowie ein der Aufpump-Kammer zugeordnetes verkapseltes Fühlersystem, welches Fühlersystem eine Vorrichtung zum Senden von Reifendruckdaten umfasst, mit
einem Transponder (12) zum Ansprechen auf vorgegebene Signale, welche ein Ansprechsignal zum Übertragen von Druckdaten auslösen,
dem Druckfühler (12b),
einem dem Transponder (12) zugeordneten Chip (12a) mit einer Kapazität, die mindestens ausreicht, um Eingangssignale von dem Druckfühler (12b) zu behandeln und Druckdaten über den Reifen (10) zu senden.

5. Luftreifen nach Anspruch 4, bei dem eine Innenauskleidung (14) radial innerhalb der Karkasslage (28) angeordnet ist, wobei der Druckfühler (12b) der Innenauskleidung benachbart und das Verkapselungsmittel an der Innenauskleidung angebracht ist.

6. Luftreifen nach Anspruch 4, bei dem das Dochtmittel (18) aus der aus gasabsorbierenden Textilkorden, Hohlfäden und gewebten Textilkorden oder Fäden bestehenden Gruppe ausgewählt ist.

7. Verfahren zum Anbringen eines Druckfühlers (12b) an einer Aufpump-Kammer (15) eines Luftreifens (10), welches Verfahren umfasst
(a) Einsetzen eines Druckfühlers (12b) in einen Reifenaufbau an einem wenig biegenden, im wesentlichen ebenen Ort entsprechend einer Oberfläche einer Aufpump-Kammer (15) in einem Reifen,
**gekennzeichnet durch** die weiteren Schritte:
(b) Einsetzen eines Dochtmittels (18) über dem Druckfühler
(c) Anbringen eines Kautschukkissens (16) aus Kautschukmaterial an der Oberfläche einer Aufpump-Kammer (15) über dem Druckfühler (12b) und dem Dochtmittel (18), wobei das Dochtmittel mindestens ein Ende außerhalb der Abmessungen des Kautschukkissens aufweist.

8. Verfahren nach Anspruch 7, mit den weiteren Schritten:
(a) Aufbauen des Reifens mit einer Innenauskleidung (14), welche eine radial innen liegende Fläche der Aufpump-Kammer umfasst,
(b) Ansetzen des Druckfühlers (12b) an die Innenauskleidung,
(c) Ansetzen des Dochtmittels (18) über dem Druckfühler, und
(d) klebendes Befestigen eines Gummikissens an der Innenauskleidung mit Abdecken des Druckfühlers und teilweisem Abdecken des Dochtmittels.

9. Verfahren nach Anspruch 7, mit dem weiteren Schritt des Auswählens des Dochtmittels (18) aus der aus Baumwoll-Anzapfkorden, Polyester-Anzapfkorden, Hohlfäden und Mischungen derselben bestehenden Gruppe.

## Revendications

1. Bandage pneumatique (10) comprenant une surface externe englobant une surface (30) entrant en contact avec le sol et une chambre de gonflage interne (15), ainsi qu'un capteur de pression (12b) encapsulé via un moyen d'encapsulage (16) associé à la surface interne en direction radiale de ladite chambre de gonflage, **caractérisé par** un moyen (18) produisant un effet de mèche associé audit capteur de pression, par lequel ledit moyen produisant en effet de mèche procure une voie pour un équilibre de pression entre ledit capteur de pression (12b) et ladite chambre de gonflage (15).

2. Bandage pneumatique selon la revendication 1, dans lequel ledit moyen (18) procurant un effet de mèche est choisi parmi le groupe constitué par des câblés en textile absorbant les gaz, des filaments creux et des filaments ou des câblés en textile tissé.

3. Bandage pneumatique selon la revendication 1, dans lequel ledit moyen d'encapsulage comprend une pièce rapportée de caoutchouc (16) entourant ledit capteur de pression, ladite pièce rapportée de caoutchouc étant fixée à la surface interne en direction radiale de ladite chambre de gonflage (15).

4. Bandage pneumatique (10) selon la revendication 1, comprenant en outre au moins deux talons annulaires parallèles (22), deux nappes de carcasse (28) entourant lesdits talons, une bande de roulement (30) disposée par-dessus lesdites nappes de carcasse dans une zone de couronne dudit bandage pneumatique, des flancs (24) disposés entre ladite bande de roulement et lesdits talons, ladite chambre de gonflage (15) à l'intérieur de ladite bande de roulement en direction radiale et en direction axiale entre lesdits flancs, et un système de détection encapsulé associé à ladite chambre de gonflage, ledit système de détection comprenant un appareil pour transmettre des données de pression du bandage pneumatique, comprenant
un répondeur (12) pour répondre à des signaux prédéterminés qui déclenchent un signal de réponse pour transmettre des données de pression,
ledit capteur de pression (12b),
une puce (12a) associée audit répondeur (12) possédant une capacité au moins suffisante pour manipuler des entrées provenant dudit capteur de pression (12b) et pour transmettre des données de pression provenant dudit bandage pneumatique (10).

5. Bandage pneumatique selon la revendication 4, dans lequel un calandrage intérieur (14) est disposé à l'intérieur de ladite nappe de carcasse (28) en direction radiale et le capteur de pression (12b) est disposé à proximité dudit calandrage intérieur, ledit moyen d'encapsulage étant fixé audit calandrage intérieur.

6. Bandage pneumatique selon la revendication 4, dans lequel ledit moyen (18) procurant un effet de mèche est choisi parmi le groupe constitué par des câblés en textile absorbant les gaz, des filaments creux et des filaments ou des câblés en textile tissé.

7. Procédé de fixation d'un capteur de pression (12b) à une chambre de gonflage (15) d'un bandage pneumatique (10), comprenant le fait de :
(a) placer un capteur de pression (12b) dans une structure de bandage pneumatique à un endroit essentiellement plat soumis à un faible fléchissement, correspondant à la surface de la chambre de gonflage (15) dans un bandage pneumatique,
**caractérisé par** les étapes supplémentaires consistant à :
(b) placer un moyen (18) produisant un effet de mèche par-dessus ledit capteur de pression ;
(c) fixer une pièce rapportée (16) constituée d'une matière de caoutchouc à ladite surface d'une chambre de gonflage (15) par-dessus ledit capteur de pression (12b) et par-dessus ledit moyen (18) procurant un effet de mèche, dans lequel au moins une extrémité dudit moyen procurant un effet de mèche est disposée en dehors des dimensions de ladite pièce rapportée de caoutchouc.

8. Procédé selon la revendication 7, comprenant en outre les étapes consistant à :
(a) confectionner ledit bandage pneumatique avec un calandrage intérieur (14) comprenant une surface interne en direction radiale de ladite chambre de gonflage ;
(b) placer ledit capteur de pression (12) sur ledit calandrage intérieur ;
(c) placer ledit moyen (18) procurant un effet de mèche par-dessus ledit capteur de pression, et
(d) fixer à l'aide d'un adhésif une pièce rapportée de caoutchouc audit calandrage intérieur recouvrant ledit capteur de pression et recouvrant en partie ledit moyen procurant un effet de mèche.

9. Procédé selon la revendication 7, comprenant les étapes supplémentaires consistant à sélectionner ledit moyen (18) procurant un effet de mèche parmi le groupe constitué par des câblés de purge en coton, des câblés de purge en polyester, des filaments creux et leurs mélanges.
